(19) Europäisches Patentamt
European Patent Office
Office européen des brevets

(11) **EP 3 064 767 A1**

(12) **EUROPÄISCHE PATENTANMELDUNG**

(43) Veröffentlichungstag:
**07.09.2016  Patentblatt 2016/36**

(21) Anmeldenummer: **15157324.3**

(22) Anmeldetag: **03.03.2015**

(51) Int Cl.:
*F02P 23/04* (2006.01)          *H01P 7/00* (2006.01)
*H01T 13/00* (2006.01)          *H05H 1/26* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **MWI Micro Wave Ignition AG**
**72186 Empfingen (DE)**

(72) Erfinder:
• **Gallatz, Armin**
  **72186 Empfingen (DE)**

• **Gallatz, Volker**
  **72172 Sulz-Bergfelden (DE)**

(74) Vertreter: **Klocke, Peter**
  **ABACUS**
  **Patentanwälte**
  **Lise-Meitner-Strasse 21**
  **72202 Nagold (DE)**

Bemerkungen:
Geänderte Patentansprüche gemäss Regel 137(2) EPÜ.

(54) **Verfahren und zum Einbringen von Mikrowellenenergie in einen Brennraum eines Verbrennungsmotors und Verbrennungsmotor**

(57)    Verfahren zum Einbringen von Mikrowellenenergie in einen Brennraum eines Hubkolben-Verbrennungsmotors mit wenigstens einem Zylinder mit Zylinderkopf bei dem die Mikrowellen über ein Mikrowellenfenster in den Brennraum gelangen, wobei die Mikrowellen um den Umfang des Brennraumes geführt und radial über mindestens einen Bereich einer als Mikrowellenfenster wirkende Verbrennungswand in den Brennraum eingekoppelt werden. Bei dem Verbrennungsmotor weist der Brennraum wenigstens bereichsweise eine als Mikrowellenfenster wirkenden Brennraumwand auf, die von mindestens einem umlaufenden Hohlleiterringraum mit mindestens einer Zuführung für die Mikrowelle und mit mindestens einer zu der Verbrennungswand gerichteten Austrittsöffnung für die Mikrowelle umgeben ist. Das Verfahren und der Verbrennungsmotor erlauben eine genaue Steuerung des Beginns einer Raumzündung eines Kraftstoff-Luft-Gemisches in einem Brennraum, so dass eine optimale schadstoffarme Verbrennung des Kraftstoffes mit einem gegenüber herkömmlichen Hubkolben-Verbrennungsmotoren erhöhten Wirkungsgrad erreicht wird. Generell ermöglicht die Erfindung die sichere Zündung von mageren Kraftstoff-Luft-Gemische.

Fig. 1B

**Beschreibung**

Die Erfindung betrifft ein Verfahren zum Einbringen von Mikrowellenenergie in einen Brennraum eines Hubkolben-Verbrennungsmotors mit wenigstens einem Zylinder mit Zylinderkopf bei dem die Mikrowellen über ein Mikrowellenfenster in den Brennraum gelangen. Die Erfindung betrifft auch einen Verbrennungsmotor.

Aus der DE 103 56 916 A1 ist bekannt, in einem Brennraum mittels Mikrowellenenergie einer Raumzündung in einem Verbrennungsmotor zu erzeugen, um damit die Verbrennung des über ein Kraftstoff-Luft-Gemisches eingebrachten Kraftstoffs besser zu zünden und zu verbrennen.

Bei herkömmlichen Motoren wird ein zündfähiges Gemisch in einem kegelförmigen Zylinderkopf komprimiert und durch eine Zündkerze zur Reaktion/Oxidation gebracht. Dabei breitet sich die chemische Oxidation kugelförmig von dem Ort der Zündung in Form einer Druck- und Reaktionsfront (Laminare Brenngangsphase) aus. Die Druckfront bewegt sich schneller als die Reaktionsfront und erreicht deshalb als erste den Zylinderrand. An diesem wird sie reflektiert und läuft der Reaktionsfront entgegen. Treffen sich beide Fronten, kann die Reaktion zum Erliegen kommen, was Wirkungsgradverluste und Schadstoffe zur Folge hat.

Abhilfe schafft das Ersetzen der lokalen Zündung durch eine Raumzündung mittels Mikrowellen. Vor dem Zünden soll das Gemisch möglichst homogen über das gesamte Volumen angeregt werden, was eine über den Brennraum verteilte Absorption erfordert. Dabei spielt die Absorptionsfähigkeit von Mikrowellen, beschrieben durch einen Materialparameter $\tan\delta(t)$ und die damit verbundene Eindringtiefe eine wesentliche Rolle.

Bei der Kompression erfolgt bereits eine druck- und temperaturabhängige Ionisation des Zündgemisches. Auf Grund dieser Ionisierung bestimmter Treibstoffmoleküle ist grundsätzlich von Absorptionsraten der Mikrowellen durch das zündfähige Gemisch im Brennraum auszugehen, die sich jedoch während des Kompressionsvorgangs zeitlich ändern dürfte.

Da die beschriebene Homogenität in der Praxis niemals vollständig erreicht werden kann, soll die Reaktionsfront von außen nach innen laufen. Es ist demnach eine Mikrowelleneinspeisung zu finden, die im kreiszylindrischen Brennraum eine Feldverteilung generiert, die längs des gesamten Umfangs homogen und längs des Radius möglichst homogen oder bevorzugt monoton bei größeren Radien zunimmt. Die Homogenität der Feldverteilung soll vom Absorptionsverhalten des Gemischs so schwach wie möglich abhängig sein.

Der Erfindung liegt folglich die Aufgabe zu Grunde, eine möglichst homogene, Zündverteilung im gesamten Brennraum zu erreichen bzw. lokale Zündkeime mindestens am Randbereich des Brennraums zu erzeugen.

Diese Aufgabe wird erfindungsgemäß durch ein Verfahren nach Anspruch 1 und einen Verbrennungsmotor nach dem Anspruch 9 gelöst. Weiter vorteilhafte Ausgestaltungen sind den jeweiligen rückbezogenen Unteransprüchen zu entnehmen.

Danach werden bei dem erfindungsgemäßen Verfahren die Mikrowellen um den Umfang des Brennraumes geführt und radial über mindestens einen Bereich einer als Mikrowellenfenster wirkende Verbrennungswand in den Brennraum eingekoppelt. Hierzu ist mindestens ein Teil der Brennraumwand beispielsweise eines Zylinders eines Hubkolben-Verbrennungsmotors aus einem geeigneten Material hergestellt, das die Funktion des Mikrowellenfensters für die Einkopplung der Mikrowellen übernimmt aber gleichzeitig aufgrund seiner Festigkeit und Temperaturstabilität für den Brennraum geeignet ist. Das kann beispielsweise ein keramisches Material vorzugsweise mit einer Reinheit >99% oder ein anderer fester für Mikrowellen durchlässiger Werkstoff sein. Die Mikrowellen können dabei in nur einer Ebene oder auch in verschiedenen Ebenen gegenläufig oder gleichlaufend um den Brennraum geführt und in diesen über die Brennraumwand eingekoppelt werden. Die Führung um den Brennraum kann dabei um eine massiv ausgeführte als Mikrowellenfenster wirkende Brennraumwand oder auch in der Brennraumwand selbst, beispielsweise in den keramischen Material mit einer beschichteten Oberfläche mit Öffnungen auf der Brennraumseite erfolgen, so dass die Öffnungen als Austrittsöffnungen für die Mikrowelle dienen. Im Nachfolgenden werden bezüglich des Verfahrens unter Brennraumwand beide Varianten verstanden.

Vorzugsweise werden die Mikrowellen über mindestens einen am Umfang des Brennraumes angeordneten Hohlleiterringraum mit mindestens einer zu dem Brennraum gerichteten Austrittsöffnung in den Brennraum eingeleitet. Die Mikrowellen werden dazu in einem für die optimalen Wellenleitung unter Vermeidung von Modensprüngen und Reflektionen in einem Hohlleiterringraum geführt, dessen Querschnitt rechteckig mit der speziellen Variante quadratisch, rund oder oval ausgebildet werden kann. Vorzugsweise ist der Querschnitt quadratisch, um Überschlage im Hohlleiterringraum zu vermeiden. Der Hohlleiterringraum kann entweder direkt angrenzend an die Brennraumwand oder, wie vorstehend erwähnt, in der Brennraumwand angeordnet werden, so dass die Mikrowellen, die durch mindestens eine Austrittsöffnung in dem Hohlleiteringraum radial in Richtung Brennraum austreten, direkt über das Mikrowellenfenster in den Brennraum eingekoppelt werden. Die mindestens eine Austrittsöffnung kann dabei sich über den ganzen Umfang des Brennraumes oder auch nur über Teilbereiche erstrecken.

Zweckmäßigerweise werden die Mikrowellen am Ende des Hohlleiterringraumes unter einem Winkel in den Brennraum geleitet, um Reflektionen der bereits um den Brennraum gelaufenen Mikrowellen am Ende des Hohlleiteringraums zurück zu einer Mikrowellenquelle zu vermeiden oder zumindest weitgehend abzuschwächen.

Bevorzugt werden die Mikrowellen von dem Hohlleiterringraum durch einen zwischen Hohlleiterringraum und Brennraumwand umlaufenden Spalt, durch einen zwischen Hohlleiterringraum und Brennraumwand umlaufenden, sich mit der Länge des Weges der Mikrowelle im Hohlleiterringraum vergrößernden Spalt oder über eine Vielzahl von, vorzugsweise sich mit der Länge des Weges der Mikrowelle im Hohlleiterringraum vergrößernde, senkrecht zur Fortpflanzungsrichtung der Mikrowelle zwischen Hohlleiterringraum und Brennraumwand angeordnete Spalte oder einer Kombination daraus eingeleitet werden. Diese Maßnahmen dienen dazu, Mikrowellenenergie in ausreichender Menge an möglichst vielen Stellen in dem Brennraum zukonzentrieren, um dort durch eine Vielzahl von Zündkeimen eine Raumzündung in dem Brennraum zu erzeugen.

Zweckmäßigerweise werden die Mikrowellen mit einer Frequenz von 25 GHz bis 90 GHz, vorzugsweise 36 GHz, eingeleitet, da es sich gezeigt hat, dass bei diesen Frequenzen die gewünschte Raumzündung in dem Brennraum erfolgt.

Weiter vorteilhaft ist, wenn die Mikrowellen in Impulspaketen eingeleitet werden, wobei vorzugsweise die Impulspakete auch nach einer bereits erfolgten Zündung eines Kraftstoff-Luft-Gemisches aufrechterhalten werden. Damit wird die Zündung des Kraftstoff-Luft-Gemisches optimiert und auch bereits erfolgter Zündung und sich möglicherweise schon vergrößerndem Brennraum weiter die Verbrennung des Kraftstoff-Luft-Gemisches angeregt.

Ein besonderer Vorteil des Verfahrens liegt darin, dass die Mikrowellen bezüglich einer Kurbelwelle winkelgradgesteuert eingeleitet werden, so dass eine genaue Steuerung der Zündung durchgeführt werden kann.

Bei einem Hubkolben-Verbrennungsmotor mit wenigstens einem Zylinder mit Zylinderkopf werden zweckmäßigerweise die Mikrowellen über einen im Zylinderkopf um den Brennraum angeordneten Hohleiterringraum eingeleitet.

Bei dem erfindungsgemäßen Verbrennungsmotor mit wenigstens einem Zylinder mit Zylinderkopf bei dem die Mikrowellen über ein Mikrowellenfenster in den Brennraum gelangen, weist der Brennraum wenigstens bereichsweise eine als Mikrowellenfenster wirkenden Brennraumwand auf, die von mindestens einem umlaufenden Hohlleiterringraum mit mindestens einer Zuführung für die Mikrowelle und mit mindestens einer zu der Verbrennungswand gerichteten Austrittsöffnung für die Mikrowelle umgeben ist. Die Brennraumwand kann dabei als ein aus Keramik oder einem anderen geeigneten Material ausgebildet und als Einsatz in dem Zylinder eingebracht sein.

Vorteilhafterweise ist zur Vermeidung der Reflektionen am Ende des Hohlleiterringraumes eine unter einem Winkel zu dem Hohlleiterringraum angeordnete Wand und eine Austrittsöffnung in Richtung Brennraumwand angeordnet.

Der Verbrennungsmotor weist Vorteilhafterweise zwischen Hohlleiterringraum und Brennraumwand ein umlaufender Spalt, ein zwischen Hohlleiterringraum und Brennraumwand umlaufenden, sich mit der Länge des Weges der Mikrowelle im Hohlleiterringraum vergrößernder Spalt oder eine Vielzahl von, vorzugsweise sich mit der Länge des Weges der Mikrowelle im Hohlleiterringraum vergrößernde, senkrecht zur Fortpflanzungsrichtung der Mikrowelle zwischen Hohlleiterringraum und Brennraumwand angeordnete Spalte oder einer Kombination daraus auf.

Grundsätzlich kann auch ein weiterer, vorzugsweise identischer, Hohleiterringraum im Anschluss an den anderen Hohleiterringraum vorgesehen sein, der beispielsweise mit den Austrittsöffnungen gegenüber den Austrittsöffnungen des anderen Hohlleiterringraumes versetzt angeordnet ist und der eine entgegensetzt angeordnete Zuführung aufweist. Auch können in dem Brennraum, insbesondere im Zylinderkopf noch zusätzlich Spitzen zur lokalen Feldüberhöhung und Erzeugung von Zündkeimen vorgesehen sein. Sofern erforderlich kann auch mindestens eine zusätzliche Mikrowellenzündkerze gemäß der parallelen Anmeldung EP 15157298.9 in dem Zylinderkopf angeordnet sein.

Der mathematischen Beschreibung der Einkopplung liegt ein Zylinderkoordinatensystem $r$, $\varphi$, $z$ zu Grunde. In einem kreiszylindrischen elektrisch leitfähig abgegrenzten Raum gehorcht die Verteilung der elektromagnetischen Wellen längs des Umfangs Sinus- bzw Cosinusfunktionen und längs des Radius Zylinderfunktionen, auch Besselfunktionen genannt. Je nach Orientierung der Feldlinien werden die zugehörigen Eigenmoden $T E_{mn}$ bzw $T M_{mn}$ Moden genannt. Dabei entspricht der erste Index $m$ der Anzahl der azimutalen, der zweite Index $n$ der Anzahl der radialen Maxima. Moden mit hohem azimutalem und niedrigem radialem Index werden Whispering Gallery Moden (WGM) genannt. Ihre Leistung oszilliert im Wesentlichen am Rand des Hohlzylinders. Mit steigendem radialem Index verlagert sich die oszillierende Leistung ins Innere des Brennraums.

Die Überlagerung zweier um $\pi/(2m)$ azimutal und zeitlich versetzter sonst gleicher Moden führt zu einer rotierenden Mode. Diese sind in der Literatur durchaus bekannt. Mathematisch drückt man eine azimutal stehende Mode durch zwei gegeneinander rotierende Moden aus durch die Gleichung:

$$2\,cos m\varphi e^{-i\omega t} = \left( e^{im\varphi} + e^{-im\varphi} \right) e^{-i\omega t}$$

Für den Fall $m = 0$ hat man eine azimutal konstante Verteilung.

Ähnliches gilt in radialer Richtung: Die radial stehende Wellen beschreibende Besselfunktion kann in ein- und auswärts propagierende Hankelfunktionen zerlegt werden:

$$2J_m(k_r r) = H_{m2}(k_r r) + H_{m1}(k_r r)$$

wobei kr die radial Wellenzahl ist. Eine Feldverteilung proportional zu

$$e^{im\varphi} * H_{m2}(k_r r)$$

beschreibt eine Mode deren Leistung spiralförmig nach innen propagiert. Die zugehörigen Phasenfronten werden dabei mit sinkendem Radius immer steiler.

Erfindungsgemäß wird eine längs des Umfangs möglichst homogene Zündung, wahlweise im Außenbereich des Zylinders, oder im ganzen Volumen dadurch erreicht, dass entweder gezielt eine rotierende Whispering Gallery Mode oder eine Volumenmode im Brennraum angeregt wird. Dazu wird ein Speisewellenleiter, vorzugsweise Rechteckwellenleiter, in Form des Hohlleiterringraumes um den Brennraum gewunden. Aus der Theorie ist bekannt, dass die Hohlleiterwellenlänge seiner Moden durch die transversalen geometrischen Abmessungen verändert werden kann. Der Speisewellenleiter und der zylindrische Brennraum werden daher in einer Ausführungsform durch periodische Öffnungen über die als Mikrowellenfenster wirkenden Brennraumwand miteinander verbunden, wodurch Leistung vom Wellenleiter in den Brennraum gekoppelt wird. Wird nun die Periode p der Öffnungen so gewählt, dass

$$p = \frac{2 * \pi}{k_l}$$

wobei $k_l$ die axiale Wellenzahl der Mode im gewundenen Wellenleiter ist, so wird gezielt eine $TE_{0n}$ Mode im Brennraum angeregt. Diese hätte im Idealfall kreisförmig nach innen laufende Phasenfronten mit konstanter Amplitude. Die eingespeiste Leistung erreicht auf direktem Weg die gegenüber liegende Wand und kann dort bereits in den gewundenen Speisewellenleiter zurück gekoppelt werden. Die zurückgelegte Weglänge im Brennraum entspricht somit dessen Durchmesser. Bei schlechter Absorption des Zündgemischs wird ein beachtlicher Teil der Leistung in den Speisewellenleiter zurück gekoppelt und zur Mikrowellenquelle reflektiert.

Aus diesem Grund wird erfindungsgemäß alternativ eine leicht abweichende Periode der Öffnungen gewählt. Dadurch werden die Phasenfronten geneigt. Die Leistung propagiert spiralförmig in den Brennraum, was eine hohe Weglänge und damit eine von tanδ weitgehend unabhängige Absorption der Mikrowellenleistung ermöglicht. Die Breite der Öffnungen wird so variiert, dass die in den Brennraum eingekoppelte Leistung längs des Umfangs konstant ist.

Wie bereits beschrieben, neigen sich die Flächen konstanter Phase umso stärker zum Radius je kleiner der Radius wird. Es gibt einen Radius, bei dem die Leistung nur noch in azimutaler Richtung propagiert. Das führt zu einen feldfreien Bereich im Inneren des Brennraums. Dieser ist dann vorteilhaft, wenn in der Mitte des Brennraums die Brennstoffkonzentration gering ist. Die angeregten Moden entsprechen den bereits erwähnten Whispering Gallery Moden. Diese Kopplung wird besonders effizient erreicht, wenn die Wellenlänge im gewundenen Wellenleiter gegenüber der Freiraumwellenlänge verkürzt wird. Dazu wird der Wellenleiter mit einem nicht absorbierenden Dielektrikum gefüllt.

Es lassen sich starke Feldüberhöhungen am Rand bei gleichzeitiger vergleichsweise schwächerer Anregung des Feldes in der Mitte erzielen, indem die die Periode der Einkopplung derart gewählt wird, dass eine Kopplung sowohl in eine Volumenmode als auch eine WGM stattfindet. Es ergibt sich dadurch eine Feldüberhöhung an den Randbereichen.

Die Anregung der Felder am Rand des Brennraums lässt sich auch zeitlich steuern. Zunächst wird eine Frequenz gewählt, bei der vom Speisewellenleiter in die den gesamten Brennraum anregende Volumenmode gekoppelt wird. Die Frequenz kann anschließend so geändert werden, dass in eine zündende WGM eingekoppelt wird.

An Ende des gewunden Wellenleiters kann eine die Polarisation drehende 45 Grad geneigte Platte angebracht werden. Die das Ende des gewundenen Leiters erreichende Mikrowellenleistung wird dann in einer gedrehten Polarisation reflektiert. Die in der 90° gedrehten Polarisation in den Brennraum eingekoppelte Leistung interferiert dann nicht mit der in Vorwärtsrichtung eingekoppelten Leistung.

In einigen Fällen kann es erforderlich sein, die Zündung lokal an der Schräge des Zylinderkopfes zu forcieren. Aus der Theorie elektromagnetischer Wellen ist bekannt, dass lokale Feldüberhöhungen bevorzugt an leitfähigen Spitzen auftreten. Bringt man diese an diversen Stellen im Motorraum (Zylinderkopf) an, werden lokale Feldüberhöhungen und damit eine lokale Zündungen erzielt.

Das Verfahren und der Verbrennungsmotor ermöglichen somit die genaue Steuerung des Beginns einer Raumzündung eines Kraftstoff-Luft-Gemisches in einem Brennraum, so dass eine optimale schadstoffarme Verbrennung des Kraftstoffes mit einem gegenüber herkömmlichen Hubkolben-Verbrennungsmotoren erhöhten Wirkungsgrad erreicht wird. Generell ermöglicht die Erfindung die sichere Zündung von mageren Kraftstoff-Luft-Gemische, was eine zusätzliche Anreicherung zum Zünden nicht erforderlich macht und zu einem geringeren Treibstoffverbrauch führt. Schadstoffe und deren Entstehung können durch die Verbrennungstemperatur und durch das Mischungsverhältnis von Luft und Treibstoff geregelt werden. Die Verbrennung gemäß der Erfindung läuft schneller ab als bei herkömmlichen Zündungen. Dies hat eine "kältere" Verbrennung zur Folge, so dass der Wirkungsgrad steigt. Weiterhin sind prinzipiell bei kälteren Verbrennungsabläufen geringere Schadstoffemissionen erzielbar. Durch die kältere Verbrennung wird die Konzentration von NO in den Abgasen reduziert. Durch die Raumzündung Ist der Brennvorgang im Unterschied zur herkömmlichen Verbrennung deutlich weniger auf den Brennfortschritt in Form von Diffusionsflammen angewiesen. Damit werden weitere Wärmeverluste vermieden und eine Effizienzsteigerung erreicht. Eine Aufheizphase des Brennraums und der Luft im Oxidationsbereich ist bei der dieser Verbrennung nicht gegeben.

Nachfolgend wird die Erfindung anhand schematischer Übersichtsskizzen näher erläutert. Weitere Merkmale der Erfindung ergeben sich aus der folgenden Beschreibung der Erfindung in Verbindung mit den Ansprüchen und der beigefügten Zeichnung. Es zeigen:

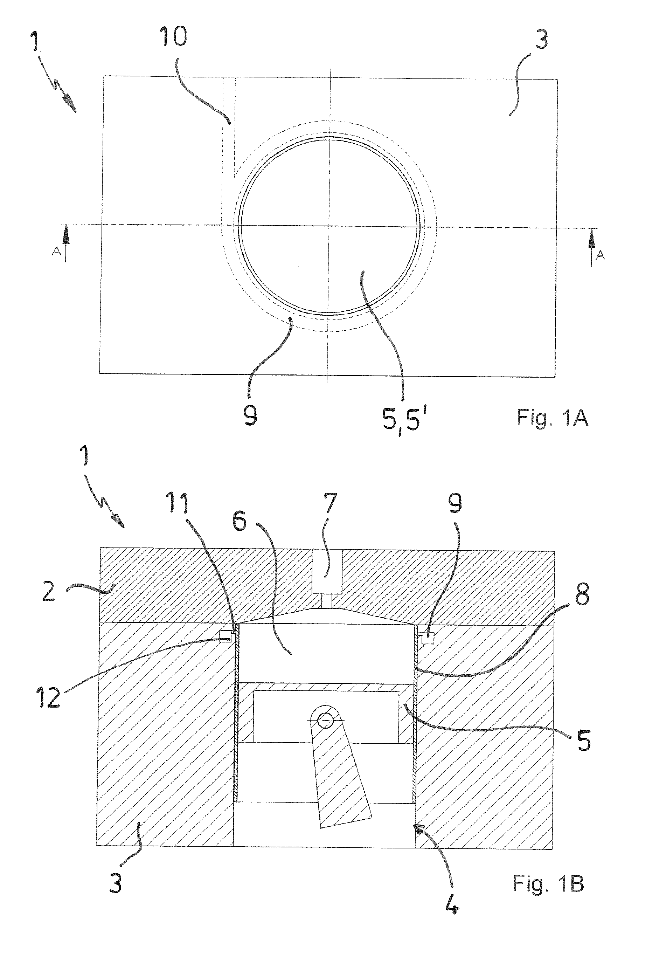

Figur 1     ein Ausführungsbeispiel mit einer ringförmigen Einkopplung, wobei der Spalt zum Brennraum über den Umfang verteilt eine gleiche Breite aufweist, in einer schematischen Draufsichtdarstellung auf einen Ausschnitt eines Hubkolben-Verbrennungsmotors ohne Zylinderkopf (Figur 1a); eine Schnittdarstellung entlang der Linie A-A von Figur 1 a mit Zylinderkopf (Figur 1 B);

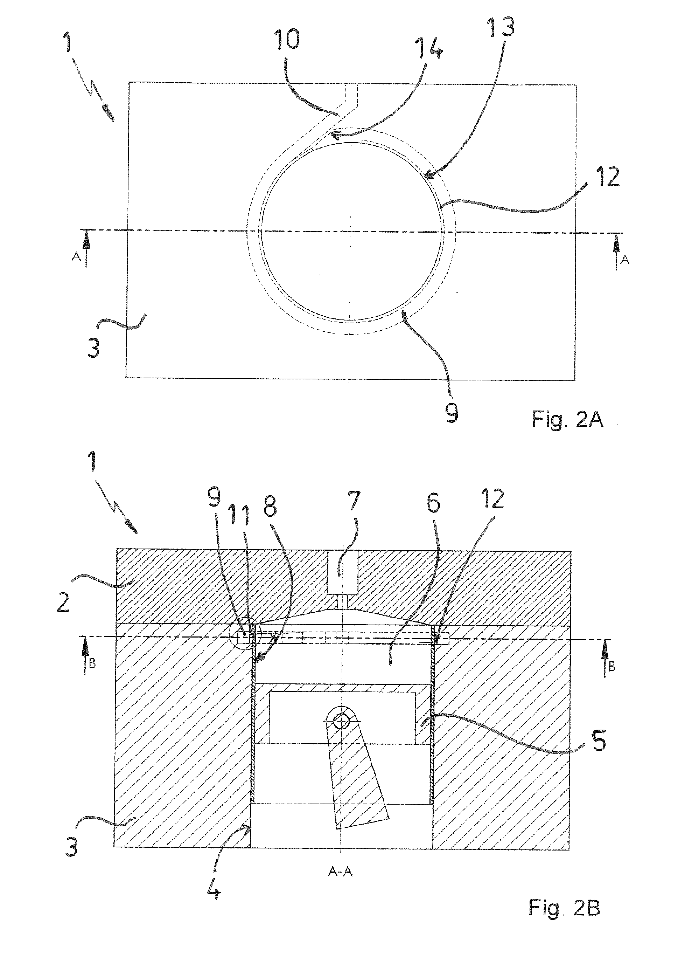

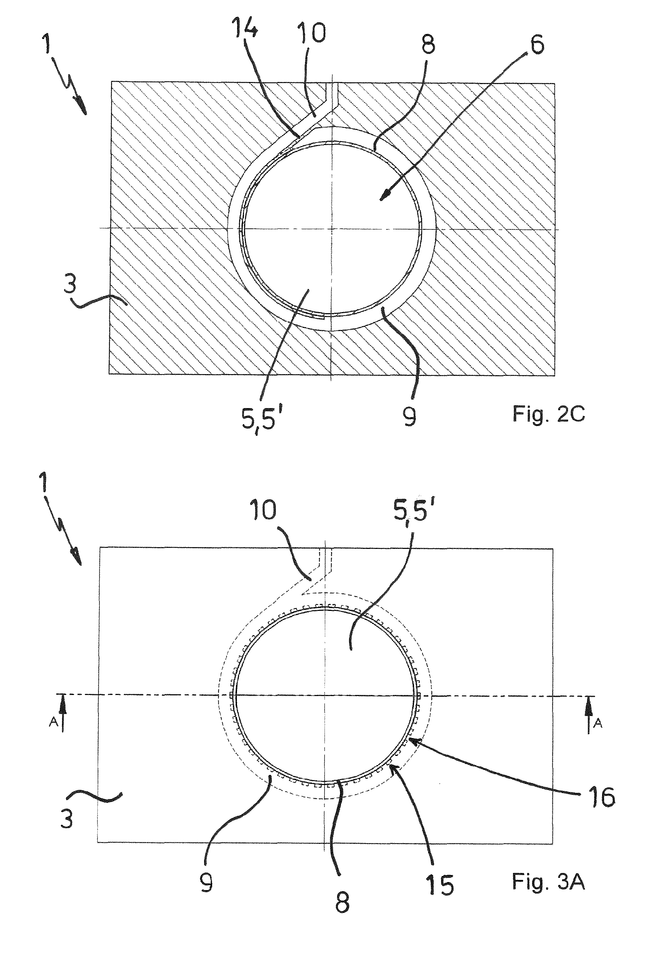

Figur 2     eine Darstellung ähnlich Figur 1 für eine Ringeinkopplung mit einem sich über die Länge der Ringstrecke vergrößernden Spalt in einer schematischen Draufsicht ohne Zylinderkopf (Figur 2a); einer Schnittdarstellung entlang der Linie A-A von Figur 2a mit Zylinderkopf (Figur 2b) und eine Schnittdarstellung entlang der Linie B-B in Figur 2b (Figur 2c), und

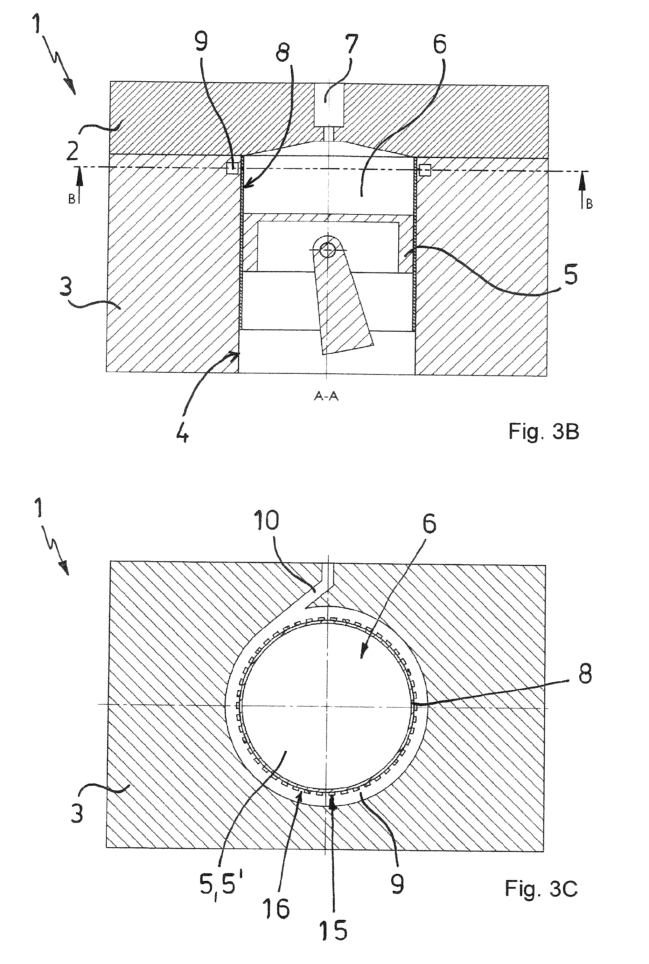

Figur 3     eine Darstellung entsprechend der Figur 2 mit einer Ringeinkopplung mit einzelnen voneinander beabstandeten Stegen in einer schematischen Draufsicht ohne Zylinderkopf (Figur 3a); einer Schnittdarstellung entlang der Linie A-A von Figur 3a mit Zylinderkopf (Figur 3b) und eine Schnittdarstellung entlang der Linie B-B von Figur 3b (Figur 3c).

In den nachfolgend beschriebenen Figuren wird die Erfindung anhand von verschiedenen Ausbildungen beispielhaft dargestellt. Sämtliche in den einzelnen Figuren enthaltenen gleichen Elemente sind mit gleichen Bezugszeichen versehen.

Die Figuren zeigen in schematischer Darstellung den Ausschnitt eines Verbrennungsmotors 1 mit einem Zylinderkopf 2 und einem Motorblock 3. In dem Motorblock 3 befindet sich ein Zylinder 4 mit einem darin beweglichen Kolben 5 und einem oberhalb des Zylinders 4 teilweise im Zylinderkopf 2 befindlichen Brennraum 6. In den Brennraum 6 mündet ein schematisch angedeuteter Einlass 7 für das Kraftstoff-Luft-Gemisch. Nicht dargestellt sind Auslässe für das Abgas, die in dem Fachmann bekannte übliche Art und Weise ausgebildet sein können. Der schematisch angedeutete Zylinderkopf 2 mit einem zentralen Einlass 7 für das Kraftstoff-Luft-Gemisch kann selbstverständlich auch zusätzlich noch Zündkerzen oder Auslässe für die Abgase aufweisen. Bei den Zündkerzen kann es sich auch um besonders ausgestaltete und in der Parallelanmeldung EP 15157298.9 beschriebenen Mikrowellenzündkerzen handeln. In dem Zylinder 4 ist eine zusätzliche Innenwand 8 vorgesehen, die aus einem Material besteht, das für die Funktion eines Mikrowellenfensters geeignet ist. Dies kann beispielsweise ein keramisches Material, vorzugsweise mit einer hohen Reinheit, Saphirglas oder ein anderes geeignetes Material sein.

In der Figur 1a läuft um die Innenwand 8 ein Hohlleiterringraum 9 im Motorblock 3, der über den gesamten Umfang eine gleichmäßig hohe Ringraumwand 12 zu der Innenwand 8 aufweist und dabei einen Spalt 11 bildet, über den die über die Mikrowellenzuführung 10 zugeführte Mikrowelle durch die als Mikrowellenfenster dienende Innenwand 8 in den Brennraum 6 gelangt. Wie bereits vorstehend beschrieben bestehen durch das Einkoppeln der Mikrowellen in den Brennraum 6 Zündkeime für eine Raumzündung des über den Einlass 7 in den Brennraum 6 gelangten Kraftstoff-Luft-Gemisches. Figur 1a und Figur 1b zeigen die Anordnung der einzelnen Teile. In dem Ausführungsbeispiel gemäß Figur 1a ist die Mikrowellenzuführung 10 als tangentiale Zuführung dargestellt, wobei diese Zuführung auch radial oder in einem Winkel dazwischen erfolgen kann.

Figur 2 zeigt eine ähnliche Ausführung, wobei hier die Ringraumwand 12 über die Länge der Wegstrecke entlang der Innenwand 8 in der Höhe abnimmt und dadurch ein sich immer größer werdender Spalt 12 bildet. Wie aus der Figur 2a ersichtlich, ist die Ringraumwand 12 vor Erreichen der Stirnwand 14 zu Ende, so dass sich hier eine Öffnung 13 über die ganze Höhe des Hohlleiterringraumes 9 ergibt. Die Mikrowellenzuführung 10 ist in diesem Ausführungsbeispiel so gewählt, dass die Stirnwand 14 gebildet wird, die dazu führt, dass die Mikrowellen möglichst wenig über den Hohlleiterringraum 9 zurück reflektiert werden sondern stattdessen unter einem Winkel in den Brennraum 6 gelangen. Figur 2c zeigt das vorstehend beschriebene in einer anderen Ansicht.

Figur 3 zeigt eine Ausführung, bei der die Mikrowellenzuführung wiederum tangential ausgebildet ist und der Hohlleiterringraum 9 wie bei dem Ausführungsbeispiel gemäß Figur 1 durchgängig und nicht wie beim Ausführungsbeispiel in Figur 2 unterbrochen ist. Die Ringraumwand 12 ist bei diesem Ausführungsbeispiel aus einzelnen voneinander beabstandeten Stegen 15 gebildet, so dass die über die Mikrowellenzuführung 10 eingeführte Mikrowelle durch die Zwischenräume 16 zwischen den Stegen 15 hindurch durch die als Mikrowellenfenster wirkende Innenwand 8 in den Brennraum 6 gelangen können. In dem Ausführungsbeispiel haben die Stege 15 die gleiche Breite und Höhe und der Zwischenraum 16 zwischen den einzelnen Stegen ist gleich groß. Sowohl die Höhe als auch die Breite der Stege 15 als auch die Breite der Zwischenräume 16 kann je nach Anwendungsfall variiert werden.

In den dargestellten Ausführungsbeispielen ist der Hohlleiterringraum 9 im Motorblock 3 um den Zylinder 4 angeordnet. Es ist auch möglich, den Hohlleiterringraum 9 in einem in der Höhe vergrößerten Zylinderkopf 2 auszubilden.

Die Motorenblöcke sind aus einem dafür geläufig verwendeten Material, üblicherweise Metall, wobei das Material entsprechend dem Einsatz ausgewählt werden kann. Die Begrenzung für die Mikrowellen in den dargestellten Hohlleiterringräumen ist selbstverständlich metallisch, wobei auch zusätzlich noch Maßnahmen getroffen werden können, um die Leitfähigkeit zu optimieren, beispielsweise durch Oberflächenbeschichtung mit einem hoch elektrisch leitfähigen Material.

**Patentansprüche**

1. Verfahren zum Einbringen von Mikrowellenenergie in einen Brennraum (6) eines Hubkolben-Verbrennungsmotors (1) mit wenigstens einem Zylinder (4) mit Zylinderkopf (2) bei dem die Mikrowellen über ein Mikrowellenfenster in den Brennraum (6) gelangen, **dadurch gekennzeichnet, dass** die Mikrowellen um den Umfang des Brennraumes (6) geführt und radial über mindestens einen Bereich einer als Mikrowellenfenster wirkende Brennraumwand (8) in den Brennraum (6) eingekoppelt werden.

2. Verfahren nach Anspruch 1, **dadurch gekennzeichnet, dass** die Mikrowellen über mindestens einen am Umfang des Brennraumes (6) angeordneten Hohlleiterringraum (9) mit mindestens einer zu dem Brennraum (6) gerichteten Austrittsöffnung (11, 13, 16) in den Brennraum (6) eingeleitet werden.

3. Verfahren nach Anspruch 2, **dadurch gekennzeichnet, dass** die Mikrowellen am Ende (14) des Hohlleiterringraumes (9) unter einem Winkel in den Brennraum (6) geleitet werden.

4. Verfahren nach Anspruch 2 oder 3, **dadurch gekennzeichnet, dass** die Mikrowellen von dem Hohlleiterringraum (9) durch einen zwischen Hohlleiterringraum (9) und Brennraumwand (8) umlaufenden Spalt (11), durch einen zwischen Hohlleiterringraum (9) und Brennraumwand (8) umlaufenden, sich mit der Länge des Weges der Mikrowelle im Hohlleiterringraum (9) vergrößernden Spalt (11) oder über eine Vielzahl von, vorzugsweise sich mit der Länge des Weges der Mikrowelle im Hohlleiterringraum (9) vergrößernde, senkrecht zur Fortpflanzungsrichtung der Mikrowelle zwischen Hohlleiterringraum (9) und Brennraumwand (8) angeordnete Spalte (15) oder einer Kombination daraus eingeleitet werden.

5. Verfahren nach einem der vorangegangenen Ansprüche, **dadurch gekennzeichnet, dass** die Mikrowellen mit einer Frequenz von 25 GHz bis 90 GHz, vorzugsweise 36 GHz, eingeleitet werden.

6. Verfahren nach einem der vorangegangenen Ansprüche, **dadurch gekennzeichnet, dass** die Mikrowellen in Impulspaketen eingeleitet werden, wobei vorzugsweise die Impulspakete auch nach einer bereits erfolgten Zündung eines Kraftstoff-Luft-Gemisches aufrecht erhalten werden.

7. Verfahren nach einem der vorangegangenen Ansprüche, **dadurch gekennzeichnet, dass** die Mikrowellen bezüglich einer Kurbelwelle winkelgradgesteuert eingeleitet werden.

8. Verfahren nach einem der vorangegangenen Ansprüche **dadurch gekennzeichnet, dass** die Mikrowellen bei einem Hubkolben-Verbrennungsmotor (1) mit wenigstens einem Zylinder (4) mit Zylinderkopf (2) über einen im Zylinderkopf (2) um den Brennraum (6) angeordneten Hohleiterringraum (9) eingeleitet werden.

9. Verbrennungsmotor (1) mit wenigstens einem Zylinder (4) mit Zylinderkopf (2) und Kolben (5), bei dem die Mikrowellen über ein Mikrowellenfenster in den Brennraum (6) gelangen, **dadurch gekennzeichnet, dass** der Brennraum (6) wenigstens bereichsweise eine als Mikrowellenfenster wirkenden Brennraumwand (8) aufweist, die von mindestens einem umlaufenden Hohlleiterringraum (9) mit mindestens einer Zuführung (10) für die Mikrowelle und mit mindestens einer zu der Verbrennungswand (8) gerichteten Austrittsöffnung (11, 13, 16) für die Mikrowelle umgeben ist.

10. Verbrennungsmotor (1) nach Anspruch 9, **dadurch gekennzeichnet, dass** am Ende des Hohlleiterringraumes (9) eine unter einem Winkel zu dem Hohlleiterringraum (9) angeordnete Wand (14) und eine Austrittsöffnung (10) in Richtung Brennraumwand (8) angeordnet ist.

11. Verbrennungsmotor (1) nach einem der Ansprüche 9 oder 10, **dadurch gekennzeichnet, dass** zwischen Hohlleiterringraum (9) und Brennraumwand (8) ein umlaufender Spalt (11), ein zwischen Hohlleiterringraum (9) und Brennraumwand (8) umlaufenden, sich mit der Länge des Weges der Mikrowelle im Hohlleiterringraum (9) vergrößernder Spalt (11) oder eine Vielzahl von, vorzugsweise sich mit der Länge des Weges der Mikrowelle im Hohlleiterringraum (9) vergrößernde, senkrecht zur Fortpflanzungsrichtung der Mikrowelle zwischen Hohlleiterringraum (9) und Brennraumwand (8) angeordnete Spalte (15) oder einer Kombination daraus angeordnet ist.

**Geänderte Patentansprüche gemäss Regel 137(2) EPÜ.**

1. Verfahren zum Einbringen von Mikrowellenenergie in einen Brennraum (6) eines Hubkolben-Verbrennungsmotors (1) mit wenigstens einem Zylinder (4) mit Zylinderkopf (2) bei dem die Mikrowellen über ein Mikrowellenfenster in den Brennraum (6) gelangen, **dadurch gekennzeichnet, dass** die Mikrowellen durch einen am Umfang des Brennraumes (6) angeordneten Hohlleiterringraum (9) geführt und radial über mindestens einen Bereich einer als Mikrowellenfenster wirkenden Brennraumwand (8) in den Brennraum (6) eingekoppelt werden, wobei
die Brennraumwand (8) den Brennraum (6) von dem Hohlleiterringraum (9) trennt und aus einem festen, temperaturstabilen und für Mikrowellen durchlässigen Werkstoff besteht,
der Hohlleiterringraum (9) mindestens eine zu dem Brennraum (6) gerichtete Austrittsöffnung (11, 13, 16) ausweist, und
der Hohlleiterringraum (9) in einem Motorblock (3) integriert ist.

2. Verfahren nach Anspruch 1, **dadurch gekennzeichnet, dass** die Mikrowellen am Ende (14) des Hohlleiterringraumes (9) unter einem Winkel von 45° in den Brennraum (6) geleitet werden, so dass sie mit der in Vorwärtsrichtung eingekoppelten Leistung nicht interferieren.

3. Verfahren nach Anspruch 1 oder 2, **dadurch gekennzeichnet, dass** die Mikrowellen von dem Hohlleiterringraum (9) durch einen zwischen Hohlleiterringraum (9) und Brennraumwand (8) umlaufenden Spalt (11), durch einen zwischen Hohlleiterringraum (9) und Brennraumwand (8) umlaufenden, sich mit der Länge des Weges der Mikrowelle im Hohlleiterringraum (9) vergrößernden Spalt (11) oder über eine Vielzahl von, vorzugsweise sich mit der Länge des Weges der Mikrowelle im Hohlleiterringraum (9) vergrößernde, senkrecht zur Fortpflanzungsrichtung der Mikrowelle zwischen Hohlleiterringraum (9) und Brennraumwand (8) angeordnete Spalte (15) oder einer Kombination daraus eingeleitet werden.

4. Verfahren nach einem der vorangegangenen Ansprüche, **dadurch gekennzeichnet, dass** die Mikrowellen mit einer Frequenz von 25 GHz bis 90 GHz, vorzugsweise 36 GHz, eingeleitet werden.

5. Verfahren nach einem der vorangegangenen Ansprüche, **dadurch gekennzeichnet, dass** die Mikrowellen in Impulspaketen eingeleitet werden, wobei vorzugsweise die Impulspakete auch nach einer bereits erfolgten Zündung eines Kraftstoff-Luft-Gemisches aufrecht erhalten werden.

6. Verfahren nach einem der vorangegangenen Ansprüche, **dadurch gekennzeichnet, dass** die Mikrowellen bezüglich einer Kurbelwelle winkelgradgesteuert eingeleitet werden.

7. Verbrennungsmotor (1) mit wenigstens einem Zylinder (4) mit Zylinderkopf (2) und Kolben (5), bei dem die Mikrowellen über ein Mikrowellenfenster in den Brennraum (6) gelangen, **dadurch gekennzeichnet, dass** der Brennraum (6) wenigstens bereichsweise eine als Mikrowellenfenster wirkenden Brennraumwand (8) aufweist, die von mindestens einem umlaufenden Hohlleiterringraum (9) mit mindestens einer Zuführung (10) für die Mikrowelle und mit mindestens einer zu der Verbrennungswand (8) gerichteten Austrittsöffnung (11, 13, 16) für die Mikrowelle umgeben ist, wobei
die Brennraumwand (8) den Brennraum (6) von dem Hohlleiterringraum (9) trennt und aus einem festen, temperaturstabilen und für Mikrowellen durchlässigen Werkstoff besteht, und
der Hohlleiterringraum (9) in dem Motorblock (3) integriert ist.

8. Verbrennungsmotor (1) nach Anspruch 7, **dadurch gekennzeichnet, dass** am Ende des Hohlleiterringraumes (9) eine unter einem Winkel von 45° zu dem Hohlleiterringraum (9) angeordnete Wand (14) und eine Austrittsöffnung (10) in Richtung Brennraumwand (8) angeordnet ist.

9. Verbrennungsmotor (1) nach einem der Ansprüche 7 oder 8, **dadurch gekennzeichnet, dass** zwischen Hohlleiterringraum (9) und Brennraumwand (8) ein umlaufender Spalt (11), ein zwischen Hohlleiterringraum (9) und Brennraumwand (8) umlaufenden, sich mit der Länge des Weges der Mikrowelle im Hohlleiterringraum (9) vergrößernder Spalt (11) oder eine Vielzahl von, vorzugsweise sich mit der Länge des Weges der Mikrowelle im Hohlleiterringraum (9) vergrößernde, senkrecht zur Fortpflanzungsrichtung der Mikrowelle zwischen Hohlleiterringraum (9) und Brennraumwand (8) angeordnete Spalte (15) oder einer Kombination daraus angeordnet ist.

Fig. 1A

Fig. 1B

Fig. 2A

Fig. 2B

A-A

Fig. 2C

Fig. 3A

Fig. 3B

Fig. 3C

**EP 3 064 767 A1**

Europäisches Patentamt
European Patent Office
Office européen des brevets

# EUROPÄISCHER RECHERCHENBERICHT

Nummer der Anmeldung

EP 15 15 7324

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 561 406 A (WARD MICHAEL A V [US]) 31. Dezember 1985 (1985-12-31) * Abbildungen * ----- | 1-9,11 | INV. F02P23/04 H01P7/00 H01T13/00 H05H1/26 |
| X | EP 2 065 592 A1 (IMAGINEERING INC [JP]) 3. Juni 2009 (2009-06-03) * Abbildungen * ----- | 1-9,11 | |
| X | US 2011/030660 A1 (IKEDA YUJI [JP]) 10. Februar 2011 (2011-02-10) * Abbildungen * ----- | 1,4-9,11 | |
| X | DE 10 2011 116340 A1 (BRUEMMER HEINZ [DE]) 25. April 2013 (2013-04-25) * Seite 2/5; Abbildungen * ----- | 1-11 | |

RECHERCHIERTE SACHGEBIETE (IPC)

F02P
H01P
H01T
H05H

Der vorliegende Recherchenbericht wurde für alle Patentansprüche erstellt

| Recherchenort | Abschlußdatum der Recherche | Prüfer |
|---|---|---|
| München | 16. September 2015 | Ulivieri, Enrico |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 15 7324

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-09-2015

| Im Recherchenbericht angeführtes Patentdokument | | Datum der Veröffentlichung | Mitglied(er) der Patentfamilie | | Datum der Veröffentlichung |
|---|---|---|---|---|---|
| US 4561406 | A | 31-12-1985 | KEINE | | |
| EP 2065592 | A1 | 03-06-2009 | AU | 2006348506 A1 | 27-03-2008 |
| | | | BR | PI0619662 A2 | 11-10-2011 |
| | | | CA | 2625789 A1 | 27-03-2008 |
| | | | CA | 2828176 A1 | 27-03-2008 |
| | | | CA | 2828290 A1 | 27-03-2008 |
| | | | CN | 101351638 A | 21-01-2009 |
| | | | CN | 102836620 A | 26-12-2012 |
| | | | CN | 104763572 A | 08-07-2015 |
| | | | EP | 2065592 A1 | 03-06-2009 |
| | | | KR | 20090055515 A | 02-06-2009 |
| | | | KR | 20130019015 A | 25-02-2013 |
| | | | US | 2009229581 A1 | 17-09-2009 |
| | | | US | 2012012077 A1 | 19-01-2012 |
| | | | US | 2012013254 A1 | 19-01-2012 |
| | | | US | 2012293071 A1 | 22-11-2012 |
| | | | US | 2013336849 A1 | 19-12-2013 |
| | | | WO | 2008035448 A1 | 27-03-2008 |
| US 2011030660 | A1 | 10-02-2011 | CN | 101970829 A | 09-02-2011 |
| | | | JP | 5374691 B2 | 25-12-2013 |
| | | | JP | 2009221947 A | 01-10-2009 |
| | | | KR | 20100128327 A | 07-12-2010 |
| | | | US | 2011030660 A1 | 10-02-2011 |
| | | | WO | 2009113692 A1 | 17-09-2009 |
| DE 102011116340 | A1 | 25-04-2013 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10356916 A1
- EP 15157298 A